(19) Europäisches Patentamt
European Patent Office
Office européen des brevets

(11) Veröffentlichungsnummer: **0 348 343 A2**

# (12) EUROPÄISCHE PATENTANMELDUNG

(21) Anmeldenummer: **89810442.7**

(22) Anmeldetag: **12.06.89**

(51) Int. Cl.⁴: **A 01 N 43/50**

(30) Priorität: **20.06.88 CH 2361/88**

(43) Veröffentlichungstag der Anmeldung:
**27.12.89 Patentblatt 89/52**

(84) Benannte Vertragsstaaten:
**AT BE CH DE ES FR GB GR IT LI LU NL SE**

(71) Anmelder: **CIBA-GEIGY AG**
**Klybeckstrasse 141**
**CH-4002 Basel (CH)**

(72) Erfinder: **Quadranti, Marco, Dr.**
**Spitalrain 7**
**CH-5200 Brugg (CH)**

## (54) Synergistisches Mittel und Verfahren zur selektiven Unkrautbekämpfung in Getreide, Mais und Reis.

(57) Mittel, welche als Wirkstoff einerseits 1-Dimethylindanyl- oder 1-Dimethyltetralinyl-5-imidazolcarbonsäure-methylester der Formel

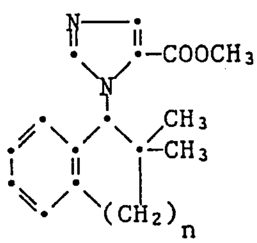

und andererseits einen der Wirkstoffe der hierin definierten Formeln II, III, IV, V, VI, VII, VIII, IX, X, XI, XII, XIII, XIV oder XV in Mischung miteinander enthalten, zeigen in Getreide, Mais und Reis synergistische herbizide Wirkung.

EP 0 348 343 A2

**Beschreibung**

**Synergistisches Mittel und Verfahren zur selektiven Unkrautbekämpfung in Getreide, Mais und Reis.**

Die vorliegende Erfindung betrifft ein synergistisches Mittel, welches eine herbizide Wirkstoffkombination enthält, die sich hervorragend zur selektiven Unkrautbekämpfung in Getreide-, Mais- und Reiskulturen eignet. Die Erfindung betrifft auch ein Verfahren zur Bekämpfung von Unkräutern in Getreide, Mais und Reis und die Verwendung des neuen Mittels.

Die zur Zeit häufigsten und wichtigsten Unkräuter in Getreide sind Spezies der Gattungen Avena fatua (Flughafer), Capsella (Hirtentäschel), Lolium (Lolch), Myosotis (Vergissmeinnicht), Papaver (Mohn), Setaria (Borstenhirse), Sida, Sinapis (Senf), Stellaria (Sternmiere), Veronica (Ehrenpreis) und Viola (Veilchen).

Die zur Zeit häufigsten und wichtigsten Unkräuter in Mais sind Spezies der Gattugen Echinochloa, Digitaria, Setaria, Panicum, Brachiaria, Cyperus, Sorghum, Amaranthus, Chenopodium, Solanum, Polygonum, Ipomoea, Abutilon, Xanthium, Sinapis, Stellaria und Cenchrus.

Die zur Zeit häufigsten und wichtigsten Unkräuter in Reis sind Spezies der Gattungen Alisma (Froschlöffel); Ammania; Cyperus (Zypergras); Echinochloa (Hühnerhirse); Eleocharis (Sumpfbinse); Fimbristylis (Fransenbinse); Sagittaria (Pfeilkraut); Ludwigia; Monochoria oder Scirpus (Binse).

Als hervorragende Selektivherbizide gegen Unkräuter in Kulturpflanzen haben sich die 1-Dimethylindanyl- und 1-Dimethyltetralinyl-5-imidazolcarbonsäure-methylester der Formel I

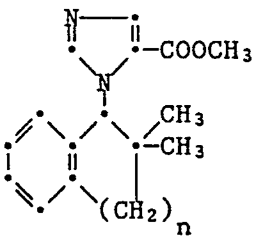

(I)

worin n für eins oder zwei steht, und deren optisch aktive Isomere und Salze mit Chlorwasserstoffsäure oder Salpetersäure erwiesen. Diese Wirkstoffe sind mit ihrer Herstellung und Verwendung in der Europäischen Patentanmeldung EP-A-207 563 beschrieben.

Unter der Formel I fallen beispielsweise die folgenden Einzelwirkstoffe:

Ia: 1-(2,2-Dimethylindan-1-yl)-5-imidazolcarbonsäure-methylester;

Ib: S-1-(2,2-Dimethylindan-1-yl)-5-imidazolcarbonsäure-methylester;

Ic: 1-(2,2-Dimethylindan-1-yl)-5-imidazoliumcarbonsäure-methylester-nitrat;

Id: 1-(2,2-Dimethylindan-1-yl)-5-imidazoliumcarbonsäure-methylester-hydrochlorid;

Ie: 1-(2,2-Dimethyltetralin-1-yl)-5-imidazolcarbonsäure-methylester; und

If: 1-(2,2-Dimethyltetralin-1-yl)-5-imidazoliumcarbonsäure-methylester-nitrat.

Bevorzugt sind die Einzelwirkstoffe Ia und Ib.

Andererseits sind Verbindungen der Formeln II, III, IV, V, VI, VII, VIII, IX, X, XI, XII, XIII, XIV oder XV ebenfalls als selektivve Herbizide bekannt. Sie sind teilweise bereits im Handel erhältlich.

Unter die Formel II

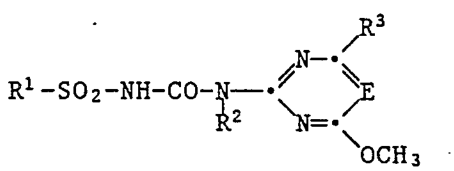

(II)

worin $R^1$ für 2-Methoxycarbonylphenyl, 2-Methoxycarbonylbenzyl, 2-Chlorphenyl, 2-(2-Chloräthoxy)phenyl, 2-(2-Methoxyäthoxy)phenyl, 4-Aethoxycarbonyl-1-methylpyrazol-5-yl oder 2-Methoxycarbonylthien-3-yl, $R^2$ für Wasserstoff oder Methyl, $R^3$ für Methoxy oder Methyl und E für Stickstoff oder die Methingruppe stehen, fallen die folgenden Einzelsubstanzen:

IIa: N-(2-Methoxycarbonylphenylsulfonyl)-N′-(4-methoxy-6-methyl-1,3,5-triazin-2-yl)-harnstoff, bekannt aus der publizierten Europäischen Patentanmeldung EP-A-7687;

IIb: N-(2-Methoxycarbonylthien-3-ylsulfonyl)-N′-(4-methoxy-6-methyl-1,3,5-triazin-2-yl)-harnstoff, bekannt aus der publizierten Europäischen Patentanmeldung EP-A-30142;

IIc: N-(2-Methoxycarbonylphenylsulfonyl)-N′-(4-methoxy-6-methyl-1,3,5-triazin-2-yl)-N′-methyl-harnstoff, bekannt aus EP-A-7687;

IId: N-(2-Methoxycarbonylbenzylsulfonyl)-N′-(4,6-dimethoxypyrimidin-2-yl)-harnstoff, bekannt aus EP-A-51466;

IIe: N-[2-(2-Methoxyäthoxy)phenylsulfonyl]-N′-(4,6-dimethoxy-1,3,5-triazin-2-yl)-harnstoff, bekannt aus dem US-Patent 4 479 821;

IIf: N-[2-(2-Chloräthoxy)phenylsulfonyl]-N′-(4-methoxy-6-methyl-1,3,5-triazin-2-yl)-harnstoff, bekannt

aus dem Europäischen Patent Nr. 44808;

IIg: N-(2-Chlorphenylsulfonyl)-N'-(4-methoxy-6-methyl-1,3,5-triazin-2-yl)-harnstoff, bekannt aus Pesticide Manual 7th Ed. (1983), 3080, The British Crop Protection Council, London; und

IIh: N-(4-Aethoxycarbonyl-1-methylpyrazol-5-ylsulfonyl)-N'-(4,6-dimethoxypyrimidin-2-yl)-harnstoff, bekannt aus EP-A-87780.

Unter die Formel III

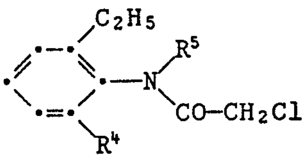

(III)

worin $R^4$ für Aethyl oder Methyl und $R^5$ für $C_2$-$C_5$-Alkoxyalkyl stehen, fallen die folgenden Ausführungsformen:

IIIa: N-(Methoxymethyl)-2-chlor-N-(2,6-diäthylphenyl)-acetamid, bekannt aus Pesticide Manual 7th Ed. (1983), 90, The British Crop Protection Council, London;

IIIb: N-(2-Methoxy-1-methyläthyl)-2-chlor-(2-äthyl-6-methylphenyl)-acetamid, bekannt aus Pesticide Manual 7th Ed. (1983), 8540, The British Crop Protection Council, London.

Unter die Formel IV

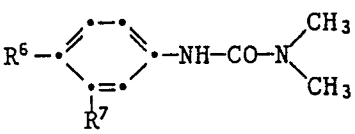

(IV)

worin $R^{16}$ für $C_1$-$C_3$-Alkyl und $R^7$ für Wasserstoff oder Chlor stehen, fallen die folgenden Einzelwirkstoffe:

IVa: 3-(4-Isopropylphenyl)-1,1-dimethylharnstoff, bekannt aus Pesticide Manual 7th Ed. (1983), 7520, The British Crop Protection Council, London; und

IVb: 3-(3-Chlor-4-methylphenyl)-1,1-dimethylharnstoff, bekannt aus Pesticide Manual 7th Ed. (1983), 3120, The British Crop Protection Council, London.

Unter die Formel V

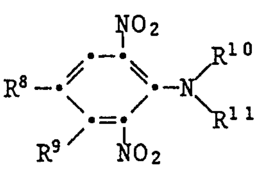

(V)

worin $R^8$ für Methyl oder Trifluormethyl, $R^9$ für Wasserstoff oder Methyl, $R^{10}$ für Wasserstoff oder Propyl und $R^{11}$ für Propyl oder 1-Aethylpropyl stehen, fallen die folgenden Ausführungsformen:

Va: 2,6-Dinitro-N,N-dipropyl-4-trifluormethylanilin, bekannt aus Pesticide Manual 7th Ed. (1983), 12120, The British Crop Protection Council, London; und

Vb: N-(1-Aethylpropyl)-3,4-dimethyl-2,6-dinitroanilin, bekannt aus Pesticide Manual 7th Ed. (1983), 9390, The British Crop Protection Council, London.

Die Verbindungen der Formeln VI, VII, VIII, IX, X, XI, XII, XIII, XIV und XV werden durch die anschliessenden Formeln dargestellt:

3-Isopropyl-1H-benzo-2,1,3-thiadiazin-4-on-2,2-dioxid der Formel VI

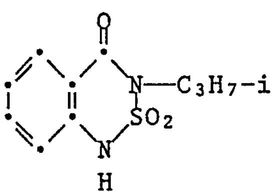

(VI)

bekannt aus Pesticide Manual 7th Ed. (1983), 770, The British Crop Protection Council, London;

O-(6-Chlor-3-phenyl-pyridazin-4-yl)-5-octyl-thiocarbonat der Formel VII

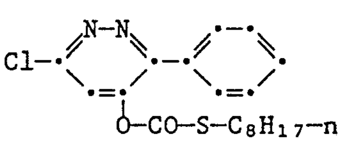

(VII)

bekannt aus Pesticide Manual 7th Ed. (1983), 10390, The British Crop Protection Council, London;

N-(3,3,5-Trimethylcyclohexen-1-yl)-N-isopropyl-2-chloracetamid der Formel VIII

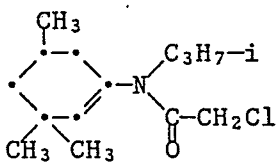

(VIII)

bekannt aus dem Europäischen Patent 13429;
4-(2,4-Dichlorbenzoyl)-5-(4-methylphenylsulfonyloxy)-1-methylpyrazol der Formel IX

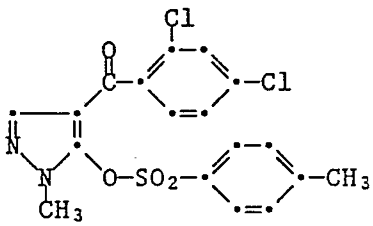

(IX)

bekannt aus DE-OS 2 513 750;
1-(2-Benzothiazolyl)-1,3-dimethylharnstoff der Formel X

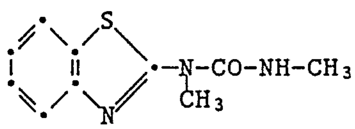

(X)

bekannt aus Pesticide Manual 7th Ed. (1983) 8050, The British Crop Protection Council, London;
3,5-Dibrom-4-hydroxybenzonitril der Formel XI

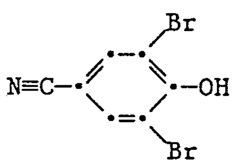

(XI)

bekannt aus Pesticide Manual 7th Ed. (1983), 1410, The British Crop Protection Council, London;
2-Aethylamino-4-tert.butylamino-6-chlor-1,3,5-triazin der Formel XII

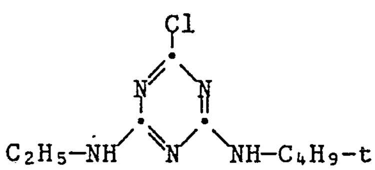

(XII)

bekannt aus Pesticide Manual 7th Ed. (1983), 11320, The British Crop Protection Council, London;
S-2,3,3-Trichlorallyl-N,N-diisopropyl-thiocarbamat der Formel XIII
$Cl_2C=CCl-CH_2-S-CO-N(C_3H_7-i)_2$ (XIII)
bekannt aus Pesticide Manual 7th Ed. (1983), 11840, The British Crop Protection Council, London;
3,7-Diohlorchinolin-8-carbonsäure der Formel XIV

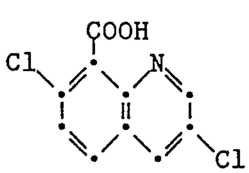

(XIV)

bekannt aus DE-OS 3 108 873; und
R-2-[4-(5-Chlor-3-fluoropyridin-2-yloxy)-phenoxy]-propionsäure-propargylester der Formel XV

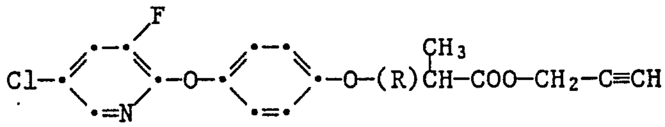 (XV)

bekannt aus US-PS 4,713,109.

Es hat sich nun überraschenderweise gezeigt, dass eine mengenmässig variable Kombination zweier Wirkstoffe, einerseits Wirkstoff I und andererseits eine Aktivsubstanz aus den Wirkstoffklassen II, III, IV, V, VI, VII, VIII, IX, X, XI, XII, XIII, XIV oder XV eine synergistische Wirkung entfaltet, die die Mehrzahl aller wichtigen Getreide-, Mais- und Reisunkräuter zu bekämpfen vermag, ohne die Getreide-, Mais- und Reiskultur zu schädigen. Es werden die Hauptunkräuter der Getreide-, Mais- und Reiskulturen, wie Arten der Monokotyledonengattungen Alopecurus, Avena, Alisma, Ammania, Cyperus, Echinochloa, Eleocharis, Fimbristylis, Lolium, Ludwigia, Monochoria, Sagittaria, Scirpus, Setaria, Digitaria, Panicum, Sorghum, Brachiaria und Cenchrus sowie der Dikotyledonengattungen, Capsella, Chrysanthenum, Galium, Myosotis, Papaver, Sida, Sinapis, Stellaria, Veronica, Viola, Amaranthus, Chenopodium, Solanum, Polyonum, Ipomoea, Abutilon und Xanthium selektiv sowohl im Vorauflauf- als auch im Nachauflaufverfahren vernichtet.

Es wird daher gemäss der vorliegenden Erfindung ein neues synergistisches Mittel zur selektiven Unkrautbekämpfung vorgeschlagen, das als Wirkstoff einerseits 1-Dimethylindanyl- oder 1-Dimethyltetralinyl-5-imidazolcarbonsäure-methylester der Formel I

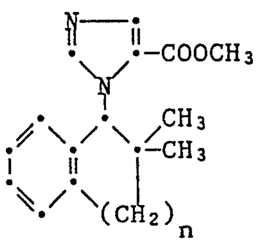 (I)

worin n für eins oder zwei steht, und deren optisch aktive Isomere und Chlorwasserstoffsäure und Salpetersäuresalze und andererseits entweder einen Wirkstoff der Formel II

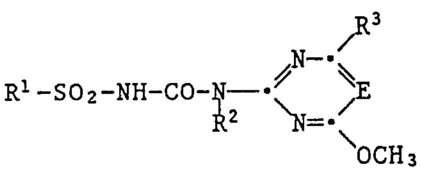 (II)

worin $R^1$ für 2-Methoxycarbonylphenyl, 2-Methoxycarbonylbenzyl, 2-Chlorphenyl, 2-(2-Chloräthoxy)phenyl, 2-(2-Methoxyäthoxy)phenyl, 4-Aethoxycarbonyl-1-methylpyrazol-5-yl oder 2-Methoxycarbonylthien-3-yl, $R^2$ für Wasserstoff oder Methyl, $R^3$ für Methoxy oder Methyl und E für Stickstoff oder die Methingruppe stehen, oder einen Wirkstoff der Formel III

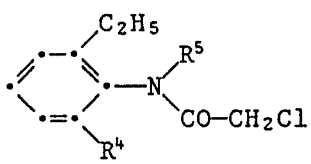 (III)

worin $R^4$ für Aethyl oder Methyl und $R^5$ für $C_2$-$C_5$-Alkoxyalkyl stehen,
oder einen Wirkstoff der Formel IV

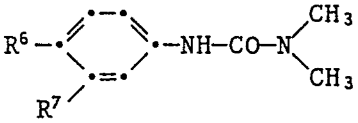 (IV)

worin $R^6$ für $C_1$-$C_3$-Alkyl und $R^7$ für Wasserstoff oder Chlor stehen,
oder einen Wirkstoff der Formel V

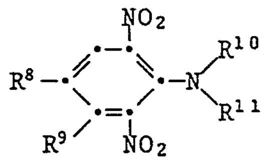

(V)

worin $R^8$ für Methyl oder Trifluormethyl, $R^9$ für Wasserstoff oder Methyl, $R^{10}$ für Wasserstoff oder Propyl und $R^{11}$ für Propyl oder 1-Aethylpropyl stehen,
oder die Verbindung der Formel VI

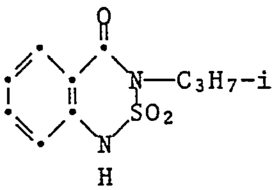

(VI)

oder die Verbindung der Formel VII

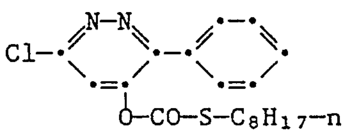

(VII)

oder die Verbindung der Formel VIII

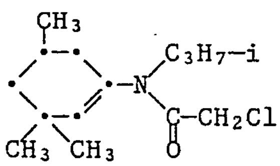

(VIII)

oder die Verbindung der Formel IX

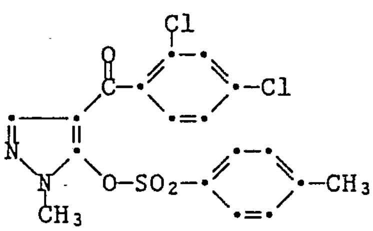

(IX)

oder die Verbindung der Formel X

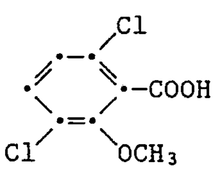

(X)

oder die Verbindung der Formel XI

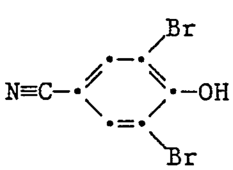

(XI)

oder die Verbindung der Formel XII

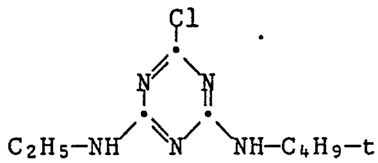
(XII)

oder die Verbindung der Formel XIII
$Cl_2C=CCl-CH_2-S-CO-N(C_3H_7-i)_2$ (XIII)
oder die Verbindung der Formel XIV

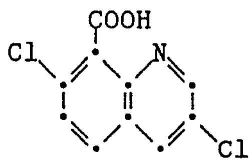
(XIV)

oder die Verbindung der Formel XV

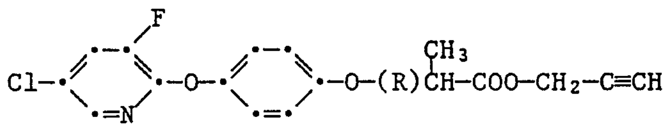
(XV)

in Mischung miteinander enthält.

Es ist in hohem Masse überraschend, dass die Kombination eines Wirkstoffes der Formel I mit einem Wirkstoff der Formeln II, III, IV, V, VI, VII, VIII, IX, X, XI, XII, XIII, XIV oder XV nicht nur eine prinzipiell zu erwartende additive Ergänzung des Wirkungsspektrums auf die üblichen mit Getreide, Mais und Reis vergesellschafteten Unkräuter hervorruft, sondern dass sie einen synergistischen Effekt erzielt, der die Wirkungsgrenzen beider Präparate unter zwei Aspekten erweitert.

Einmal werden die Aufwandmengen der Einzelverbindungen I und II, III, IV, V, VI, VII, VIII, IX, X, XI, XII, XIII, XIV oder XV bei gleichbleibend guter Wirkung deutlich gesenkt. Zum anderen erzielt die kombinierte Mischung auch dort noch einen hohen Grad der Unkraut-Bekämpfung, wo beide Einzelverbindungen im Bereich allzu geringer Aufwandmengen völlig wirkungslos geworden sind. Dies hat eine wesentliche Verbreiterung des Unkrautspektrums und eine zusätzliche Erhöhung der Sicherheitsmarge auf Getreide, Mais und Reis zur Folge, wie sie für unbeabsichtigte Wirkstoffüberdosierung notwendig und erwünscht ist.

Das erfindungsgemässe Mittel kann in Mais-, Reis- und Getreidekulturen wie Hafer, Triticale, Gerste, Roggen und inbesondere Weizen zur selektiven Unkrautbekämpfung eingesetzt werden. In Reis kann es sowohl in Wasserreiskulturen (paddy-rice) auch in Reiskulturen auf trockenem Ackerboden (upland-rice) eingesetzt werden.

Die erfindungsgemässe Wirkstoffkombination enthält einen Wirkstoff der Formel I und einen der Formeln II, III, IV, V, VI, VII, VIII, IX, X, XI, XII, XIII, XIV oder XV in beliebigem Mischungsverhältnis, in der Regel mit einem Ueberschuss der einen über die andere Komponente. Das Mischungsverhältnis ist dabei so unkritisch, dass sowohl Ueberschüsse der Komponente der Formel I, als auch Ueberschüsse der Komponente der Formeln II, III, IV, V, VI, VII, VIII, IX, X, XI, XII, XIII, XIV oder XV toleriert werden. Bevorzugte Mischungsverhältnisse zwischen dem Wirkstoff I und den Mischpartnern der Formeln II, III, IV, V, VI, VII, VIII, IX, X, XI, XII, XIII, XIV oder XV liegen zwischen 100:1 und 1:100, insbesondere zwischen 10:1 und 1:10. Die erfindungsgemässen Wirkstoffkombinationen zeigen eine ausgezeichnete Wirkung gegen Unkräuter, ohne die Kulturen in den mit Vorteil angewendeten Aufwandmengen von 0,005 bis 3 kg, vorzugsweise 0,01 bis 2 kg pro Hektar, nennenswert zu beeinflussen.

Für die Anwendung in Getreide, insbesondere in Weizen und Gerste, eignen sich in ganz besonderem Masse solche Mischungen von Wirkstoffen, welche neben einer Verbindung der Formel I als Mischpartner eine der folgenden Verbindungen enthält:

N-(2-Methoxycarbonylphenylsulfonyl)-N′-(4-methoxy-6-methyl-1,3,5-triazin-2-yl)-harnstoff (Verbindung IIa),
N-(2-Methoxycarbonylthien-3-ylsulfonyl)-N′-(4-methoxy-6-methyl-1,3,5-triazin-2-yl)-harnstoff (Verbindung IIb),
N-(2-Methoxycarbonylphenylsulfonyl)-N′-(4-methoxy-6-methyl-1,3,5-triazin-2-yl)-N′-methyl-harnstoff (Verbindung IIc),
N-[2-(2-Chloräthoxy)phenylsulfonyl]-N′-(4-methoxy-6-methyl-1,3,5-triazin-2-yl)harnstoff (Verbindung IIf),
N-(2-Chlorphenylsulfonyl)-N′-(4-methoxy-6-methyl-1,3,5-triazin-2-yl)harnstoff (Verbindung IIg),
3-(4-Isopropylphenyl)-1,1-dimethylharnstoff (Verbindung IVa),
3-(3-Chlor-4-methylphenyl)-1,1-dimethylharnstoff (Verbindung IVb),
2,6-Dinitro-N,N-dipropyl-4-trifluormethylanilin (Verbindung Va),
N-(1-Aethylpropyl)-3,4-dimethyl-2,6-dinitroanilin (Verbindung Vb),
1-(2-Benzothiazolyl)-1,3-dimethylharnstoff (Verbindung X),
S-2,3,3-Trichlorallyl-N,N-diisopropylthiocarbamat (Verbindung XIII) oder

R-2-[4-(5-Chlor-3-fluorpyridin-2-yloxy)-phenoxy]-propionsäure-propargylester (Verbindung XV).

Für die Anwendung in Mais eignen sich insbesondere solche erfindungsgemässen Mischungen, welche neben einer Verbindung der Formel I als Mischpartner eine der folgenden Verbindungen enthält:
N-(Methoxymethyl)-2-chlor-N-(2,6-diäthylphenyl)-acetamid (Verbindung IIIa),
N-(2-Methoxy-1-methyläthyl)-2-chlor(2-äthyl-6-methylphenyl)-acetamid (Verbindung IIIb),
O-(6-Chlor-3-phenyl-pyridazin-4-yl)-S-oktyl-thiocarbonate (Verbindung VII),
N-(3,3,5-Trimethylcyclohexen-1-yl)-N-isopropyl-2-chloracetamid (Verbindung VIII),
3,5-Dibrom-4-hydroxybenzonitril (Verbindung XI) oder
2-Aethylamino-4-tert.butylamino-6-chlor-1,3,5-triazin (Verbindung XII).

Für die Anwendung in Reiskulturen eignen sich insbesondere solche erfindungsgemässen Mischungen, in welchen sich neben einer Verbindung der Formel I als Mischpartner eine der folgenden Verbindungen findet:
N-(2-Methoxycarbonylbenzylsulfonyl)-N′-(4,6-dimethoxypyrimidin-2-yl)harnstoff (Verbindung IId),
N-[2-(2-Methoxyäthoxy)phenylsulfonyl]-N′-(4,6-dimethoxy-1,3,5-triazin-2-yl)-harnstoff (Verbindung IIe),
N-(4-Aethoxycarbonyl-1-methylpyrazol-5-ylsulfonyl)-N′-(4,6-dimethoxypyrimidin-2-yl)-harnstoff (Verbindung IIh),
3-Isopropyl-1H-benzo-2,1,3-thiadiazin-4-on-2,2-dioxid (Verbindung VI),
4-(2,4-Dichlorbenzoyl)-5-(4-methylphenylsulfonyloxy)-1-methylpyrazol (Verbindung IX) oder
3,7-Dichlorchinolin-8-carbonsäure (Verbindung XIV).

Bevorzugte erfindungsgemässe Mischungen enthalten neben einer der Verbindungen Ia, Ib, Ic, Id, Ie oder If als Mischpartner die Verbindungen der Formel II, insbesondere IIa, IIb, IIc, IId, IIe, IIf, IIg oder IIh, die Verbindungen der Formel III, insbesondere IIIa oder IIIb, oder die Verbindungen der Formel IV, insbesondere IVa oder IVb.

Als ganz besonders wirksame synergistische Wirkstoffgemische haben sich Kombinationen der Verbindungen mit den folgenden einzelnen Wirkstoffen erwiesen:

- Mischungen von 1-(2,2-Dimethylindan-1-yl)-5-imidazolcarbonsäure-methylester (Ia) und 3-(3-Chlor-4-methylphenyl)-1,1-dimethylharnstoff (IVb).
-Mischungen von 1-(2,2-Dimethyltetralin-1-yl)-5-imidazolcarbonsäure-methylester (Ie) und N-(2-Methoxy-1-methyläthyl)-2-chlor-(2-äthyl-6-methylphenyl)-acetamid (IIIb).
-Mischungen von 1-(2,2-Dimethyltetralin-1-yl)-5-imidazolcarbonsäure-methylester (Ie) und N-[2-(2-Methoxyäthoxy)-phenylsulfonyl]-N′-(4,6-dimethoxy-1,3,5-triazin-2-yl)harnstoff (IIe).
-Mischungen von 1-(2,2-Dimethyltetralin-1-yl)-5-imidazoliumcarbonsäure-methylester-nitrat (If) und N-[2-(2-Methoxyäthoxy)-phenylsulfonyl]-N′-(4,6-dimethoxy-1,3,5-triazin-2-yl)harnstoff (IIe).

Die Formulierungen, d.h. die das erfindungsgemässe Wirkstoffgemisch und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Aether und Ester, wie Aethanol, Aethylenglykol, Aethylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle wie epoxidiertes Kokosnussöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände, wie z.B. Korkmehl oder Sägemehl, verwendet werden.

Besonders vorteilhafte, applikationsfördernde Zusatzstoffe, die zu einer starken Reduktion der Aufwandmenge führen können, sind ferner natürliche (tierische oder pflanzliche) oder synthetische Phospholipide aus der Reihe der Kephaline und Lecithine, wie z.B. Phosphatidyläthanolamin, Phosphatidylserin, Phosphitidylcholin, Sphingomyelin, Phosphatidylinosit, Phosphatidylglycerin, Lysolecithin, Plasmalogene oder Cardiolipin, die man beispielsweise aus tierischen oder pflanzlichen Zellen, insbesondere Hirn, Herz, Lunge, Leber, Eidotter oder Sojabohnen gewinnen kann. Verwendbare Handelsmischungen sind z.B. Phosphatidylcholin-Mischungen. Synthetische Phospholipide sind z.B. Dioctanoylphosphatidylcholin und Dipalmitoylphosphatidylcholin.

Als oberflächenaktive Verbindungen kommen nichtionogene, kation- und/oder anionaktive Tenside in guten Emulgier-, Dispergier- und Netzeigenschaften in Betracht. Unter Tensiden sind auch Tensidgemische zu verstehen.

Geeignete anionische Tenside können sowohl sogenannte wasserlösliche Seifen, als auch wasserlösliche synthetische oberflächenaktive Verbindungen sein.

Als Seifen seien die Alkali-, Erdalkali- oder gegebenenfalls substituierten Ammoniumsalze von höheren

Fettsäuren ($C_{10}$-$C_{22}$), wie z.B. die Na-oder K-Salze der Oel- oder Stearinsäure, oder von natürlichen Fettsäuregemischen, die z.B. aus Kokosnuss- oder Talgöl gewonnen werden können, genannt. Ferner sind auch die Fettsäuremethyl-taurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxid-Addukten. Die sulfonierten Benzimidazolderivate enthalten vorzugsweise 2-Sulfonsäuregruppen und einen Fettsäurerest mit 8-22 C-Atomen. Alkylarylsulfonate sind z.B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Aethylenoxid-Adduktes in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxidaddukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglykoläther, Polypropylen-Polyäthylenoxidaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z.B. das Stearyltrimethylammoniumchlorid oder das Benzyldi(2-chloräthyl)äthyl-ammoniumbromid.

Die in der Formulierungstechnik gebräuchlichen Tenside sind u.a. in folgenden Publikationen beschrieben:
"Mc Cutcheon's Detergents and Emulsifiers Annual" MC Publishing Corp., Ridgewood, New Jersey, 1981;
H. Stache, "Tensid-Taschenbuch", 2. Aufl., C. Hanser Verlag, München, Wien, 1981;
M. and J. Ash. "Encyclopedia of Surfactants", Vol. I-III, Chemical Publishing Co., New York, 1980-1981.

Die agrochemischen Zubereitungen enthalten in der Regel 0,1 bis 95 %, insbesondere 0,1 bis 80 %, Wirkstoffgemisch der Formeln I und II, III, IV, V, VI, VII, VIII, IX, X, XI, XII, XIII, XIV oder XV 1 bis 99,9 % eines festen oder flüssigen Zusatzstoffes und 0 bis 25 %, insbesondere 0,1 bis 25 % eines Tensides.

Insbesondere setzen sich bevorzugte Formulierungen folgendermassen zusammen: (% = Gewichtsprozent)

| | | | |
|---|---|---|---|
| Emulgierbare Konzentrate | | | |
| Aktives Wirkstoffgemisch: | 1 bis 20 %, | bevorzugt | 5 bis 10 % |
| oberflächenaktives Mittel: | 5 bis 30 %, | vorzugsweise | 10 bis 20 % |
| flüssiges Trägermittel: | 50 bis 94 %, | vorzugsweise | 70 bis 85 % |
| Stäube: | | | |
| Aktives Wirkstoffgemisch: | 0,1 bis 10 %, | vorzugsweise | 0,1 bis 1 % |
| festes Trägermittel: | 99,9 bis 90 %, | vorzugsweise | 99,9 bis 99 %. |
| Suspension-Konzentrate | | | |
| Aktives Wirkstoffgemisch: | 5 bis 75 %, | vorzugsweise | 10 bis 50 % |
| Wasser: | 94 bis 25 %, | vorzugsweise | 88 bis 30 % |
| oberflächenaktives Wasser: | 1 bis 40 %, | vorzugsweise | 2 bis 30 % |
| Benetzbare Pulver | | | |
| Aktives Wirkstoffgemisch: | 0,5 bis 90 %, | vorzugsweise | 1 bis 80 % |
| oberflächenaktives Mittel: | 0,5 bis 20 %, | vorzugsweise | 1 bis 15 % |
| festes Trägermaterial: | 5 bis 99 %, | vorzugsweise | 15 bis 90 % |
| Granulate | | | |
| aktives Wirkstoffgemisch: | 0,5 bis 30 %, | vorzugsweise | 3 bis 15 % |
| festes Trägermittel: | 99,5 bis 70 %, | vorzugsweise | 97 bis 85 %. |

Während als Handelsware eher konzentrierte Mittel bevorzugt werden, verwendet der Endverbraucher in der Regel verdünnte Mittel. Die Anwendungsformen können bis hinab zu 0,001 % an Wirkstoff verdünnt werden. Den beschriebenen erfindungsgemässen Mitteln lassen sich andere biozide Wirkstoffe oder Mittel beimischen. So können die neuen Mittel ausser den genannten Verbindungen der allgemeinen Formel I und der Formeln II, III, IV, V, VI, VII, VIII, IX, X, XI, XII, XIII, XIV oder XV, z.B. Insektizide, Fungizide, Bakterizide, Fungistatika, Bakteriostatika oder Nematizide zur Verbreiterung des Wirkungsspektrums enthalten.

Im Einzelnen lassen sich die erfindungsgemässen Mittel allgemein nach den folgenden Beispielen formulieren:

Formulierungsbeispiele

Beispiel F1:

Formulierungsbeispiele für synergistische Wirkstoffgemische der Formeln I und II, III, IV, V, VI, VII, VIII, IX, X, XI, XII, XIII, XIV oder XV (% = Gewichtsprozent)

a) Spritzpulver

| | a) | b) | c) | d) |
|---|---|---|---|---|
| Wirkstoff I | 10 % | 20 % | 5 % | 30 % |
| einer der Wirkstoffe II, III, IV, V, VI, VII, VIII, IX, X, XI, XII, XIII, XIV oder XV, | 10 % | 40 % | 15% | 30 % |
| Na-Ligninsulfonat | 5 % | 5 % | 5 % | 5 % |
| Na-Laurylsulfat | 3 % | - | 3 % | - |
| Na-Diisobutyl-naphthalinsulfonat | - | 6 % | - | 6 % |
| Octylphenolpoly-äthylenglykoläther 7-8 Mol AeO) | - | 2 % | - | 2 % |
| Hochdisperse Kieselsäure | 5 % | 27 % | 5 % | 27 % |
| Kaolin | 67 % | - | 67 % | - |

Das Wirkstoffgemisch wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

b) Emulsions-Konzentrat

| | a) | b) | c) |
|---|---|---|---|
| Wirkstoff I | 5 % | 5 % | 12 % |
| einer der Wirkstoffe II, III, IV, V, VI, VII, VIII, IX, X, XI, XII, XIII, XIV oder XV | 5 % | 20 % | 13 % |
| Octylphen-olpolyäthy-lenglyko-läther (4-5 Mol AeO) | 3 % | 3 % | 3 % |
| Ca-Dode-cylbenzol-sulfonat | 3 % | 3 % | 2 % |
| Ricinusöl-polyglyko-läther (36 Mol AeO) | 4 % | 4 % | 4 % |
| Cyclohex-anon | 30 % | 30 % | 31 % |
| Xylolge-misch | 50 % | 35 % | 35 % |

Aus diesen Konzentraten können durch Verdünnen mit Wasser Emulsionen jeder gewünschten

Konzentration hergestellt werden.

c) Stäubemittel

| | a) | b) | c) | d) |
|---|---|---|---|---|
| Wirkstoff I | 2 % | 4 % | 2 % | 4 % |
| einer der Wirkstoffe II, III, IV, V, VI, VII, VIII, IX, X, XI, XII, XIII, XIV oder XV, | 3 % | 4 % | 4 % | 8 % |
| Talkum | 95 % | - | 94 % | - |
| Kaolin | - | 92 % | - | 88 % |

Man erhält anwendungsfertige Stäubemittel, indem das Wirkstoffgemisch mit dem Träger vermischt und auf einer geeigneten Mühle vermahlen wird.

d) Extruder Granulat

| | a) | b) | c) |
|---|---|---|---|
| Wirkstoff I | 5 % | 3 % | 5 % |
| einer der Wirkstoffe II, III, IV, V, VI, VII, VIII, IX, X, XI, XII, XIII, XIV oder XV | 5 % | 7 % | 15 % |
| Na-Ligninsulfonat | 2 % | 2 % | 2 % |
| Carboxymethylcellulose | 1 % | 1 % | 1 % |
| Kaolin | 87 % | 87 % | 77 % |

Das Wirkstoffgemisch wird mit den Zusatzstoffen vermischt, vermahlen und mit Wasser angefeuchtet. Dieses Gemisch wird extrudiert und anschliessend im Luftstrom getrocknet.

e) Umhüllungs-Granulat

| | a) | b) |
|---|---|---|
| Wirkstoff I | 1,5 % | 3 % |
| einer der Wirkstoffe II, III, IV, V, VI, VII, VIII, IX, X, XI, XII, XIII, XIV oder XV, | 1,5 % | 5 % |
| Polyäthylenglykol (MG 200) | 3 % | 3 % |
| Kaolin | 94 % | 89 % |

Das fein gemahlene Wirkstoffgemisch wird in einem Mischer auf das mit Polyäthylenglykol angefeuchtete Kaolin gleichmässig aufgetragen. Auf diese Weise erhält man staubfreie Umhüllungs-Granulate.

f) Suspensions-Konzentrat

| | a) | b) |
|---|---|---|
| Wirkstoff I | 20 % | 20 % |
| einer der Wirkstoffe II, III, IV, V, VI, VII, VIII, IX, X, XI, XII, XIII, XIV oder XV, | 20 % | 40 % |
| Aethylenglykol | 10 % | 10 % |
| Nonylphenolpolyäthylenglykoläther (15 Mol AeO | 6 % | 6 % |
| Na-Ligninsulfonat | 10 % | 10 % |
| Carboxymethylcellulose | 1 % | 1 % |
| 37 %ige wässrige Formaldehyd-Lösung | 0,2 % | 0,2 % |
| Silikonöl in Form einer 75 %igen wässrigen Emulsion | 0,8 % | 0,8 % |
| Wasser | 32 % | 12 % |

Das fein gemahlene Wirkstoffgemisch wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Ein synergistischer Effekt liegt bei Herbiziden immer dann vor, wenn die herbizide Wirkung der Wirkstoffkombination I und II, III, IV, V, VI, VII, VIII, IX, X, XI, XII, XIII, XIV oder XV grösser ist als die Summe der Wirkung der einzeln applizierten Wirkstoffe.

Die zu erwartende herbizide Wirkung E für eine gegebene Kombination zweier Herbizide kann (vgl. COLBY, S.R., "Calculating synergistic and antagonistic response of herbicide combinations", Weeds 15, Seiten 20-22, 1967) wie folgt berechnet werden:

$$E = X + \frac{Y \cdot (100-X)}{100}$$

Dabei bedeuten:

X = Prozent Wachstumshemmung bei Behandlung mit einem Herbizid I mit p kg Aufwandmenge pro Hektar im Vergleich zur unbehandelten Kontrolle (= 0 %).

Y = Prozent Wachstumshemmung bei Behandlung mit einem Herbizid II, III, IV, V, VI, VII, VIII, IX, X, XI, XII, XIII, XIV oder XV mit q kg Aufwandmenge pro Hektar im Vergleich zur unbehandelten Kontrolle

E = Erwartete herbizide Wirkung (Prozent Wachstumshemmung im Vergleich zur unbehandelten Kontrolle) nach Behandlung mit Herbizidgemisch I und II, III, IV, V, VI, VII, VIII, IX, X, XI, XII, XIII, XIV oder XV, bei einer Aufwandmenge von p + q kg Wirkstoffmenge pro Hektar.

Ist die tatsächlich beobachtete Wirkung grösser als der zu erwartende Wert E, so liegt Synergismus vor.

Der synergistische Effekt der Kombinationen der Wirkstoffe I und II, III, IV, V, VI, VII, VIII, IX, X, XI, XII, XIII, XIV oder XV wird in den folgenden Beispielen demonstriert.

Biologische Beispiele:

Beispiel B1: Preemergenter Versuch

Die Testpflanzensamen werden in Plastiktöpfe, die 0,5 l sterilisierte Ackererde enthalten, im Gewächshaus angesät. Einen Tag nach der Saat wird die Erdoberfläche mit einer wässrigen Dispersion der Wirkstoffkombination besprüht.

Die Aufwandmenge an Wirksubstanz wird durch geeignete Verdünnung des Konzentrats eingestellt. Man versprüht jeweils 50 ml Dispersion pro $m^2$. Die Testpflanzen werden im Gewächshaus bei Tagestemperaturen

von 18-22°C und Nachttemperaturen von 10-11°C, einer rel. Luftfeuchtigkeit von 60-70 % und täglicher Bewässerung weiterkultiviert. 2 bis 4 Wochen nach Saat und Applikation erfolgt die Auswertung. Registriert wird die prozentuale Wachstumshemmung im Vergleich zur unbehandelten Kontrolle. Als Massstab gilt folgende lineare Skala:

| | | |
|---|---|---|
| 100 % | = | Pflanzen abgestorben |
| 50 % | = | mittlere Wirkung |
| 0 % | = | wie unbehandelte Kontrolle |

Die Versuchsergebnisse sind zusammen mit dem nach der oben zitierten Colby-Formel berechneten Erwartungswerten in den Tabellen eingetragen. Angegeben sind die jeweils angewendeten Aufwandmengen an Wirkstoffen sowie die geprüften Kultur- und Unkrautpflanzen in jeweils drei Tabellen. Die ersten beiden Tabellen zeigen die Ergebnisse der Einzelwirkstoffe, die dritte Tabelle representiert die berechneten Erwartungswerte gemäss Colby in Gegenüberstellung mit den experimentell ermittelten Werten.

a) Aktivität von Gemischen Ia mit IVb

Evaluierung:
21 Tage nach Applikation in Prozent Wachstumshemmung im Vergleich zur unbehandelten Kontrolle.

| Verbindung Ia g AS/ha | 500 | 300 |
|---|---|---|
| Weizen "Probus" | 0 | 0 |
| Viola tricolor | 98 | 90 |
| Veronica hed. | 95 | 95 |
| Stellaria media | 0 | 0 |
| Alopecurus myos. | 80 | 45 |

| Verbindung IVb g AS/ha | 2100 | 1800 | 1500 | 1200 |
|---|---|---|---|---|
| Weizen "Probus" | 0 | 0 | 0 | 0 |
| Viola tricolor | 0 | 0 | 0 | 0 |
| Veronica hed. | 30 | 20 | 20 | 20 |
| Stellaria media | 10 | 10 | 0 | 0 |
| Alopecurus myos. | 90 | 60 | 60 | 25 |

| Aufwandmengen in g AS/ha | | Weizen "Probus" | | Viola tricolor | | Veronica hederaefolia | | Stellaria media | | Alopecurus myosuroides | |
|---|---|---|---|---|---|---|---|---|---|---|---|
| Verbindung Ia | Verbindung IVb | gefundene Wirkung | Erwartungswert | gefundene Wirkung | Erwartungswert | gefundene Wirkung | Erwartungswert | gefundene Wirkung | Erwartungswert | gefundene Wirkung | Erwartungswert |
| 500 | 2100 | 0 | 0 | 100 | 98 | 100 | 99 | 85 | 10 | 97 | 98 |
| 500 | 1800 | 0 | 0 | 100 | 98 | 100 | 98 | 70 | 10 | 95 | 92 |
| 500 | 1500 | 0 | 0 | 100 | 98 | 100 | 98 | 60 | 0 | 90 | 92 |
| 500 | 1200 | 0 | 0 | 100 | 98 | 97 | 98 | 60 | 0 | 60 | 85 |
| 300 | 2100 | 0 | 0 | 98 | 90 | 100 | 97 | 70 | 10 | 97 | 95 |
| 300 | 1800 | 0 | 0 | 95 | 90 | 100 | 96 | 60 | 10 | 90 | 78 |
| 300 | 1500 | 0 | 0 | 90 | 90 | 95 | 96 | 60 | 0 | 85 | 78 |
| 300 | 1200 | 0 | 0 | 85 | 90 | 80 | 96 | 60 | 0 | 60 | 59 |

b) Aktivität von Gemischen Ie mit IIIb.

Evaluierung:
21 Tage nach Applikation in Prozent Wachstumshemmung im Vergleich zur unbehandelten Kontrolle.

| Verbindung Ie g AS/ha | 1000 | 500 | 250 | 125 | 60 |
|---|---|---|---|---|---|
| Mais "Blizzard" | 0 | 0 | 0 | 0 | 0 |
| Capsella bursa-pastoris | 60 | 60 | 60 | 60 | 50 |
| Sida spinosa | 30 | 30 | 30 | 30 | 20 |

| Verbindung IIIb | 1000 | 500 | 250 | 125 | 60 |
|---|---|---|---|---|---|
| Mais "Blizzard" | 0 | 0 | 0 | 0 | 0 |
| Capsella bursa-pastoris | 20 | 20 | 20 | 0 | 0 |
| Sida spinosa | 0 | 0 | 0 | 0 | 0 |

| Aufwandmengen g AS/ha | | Mais "Blizzard" | | Capsella bursa-pastoris | | Sida spinosa | |
|---|---|---|---|---|---|---|---|
| Verbindung Ie | Verbindung IIIb | gefundene Wirkung | Erwartungswert | gefundene Wirkung | Erwartungswert | gefundene Wirkung | Erwartungswert |
| 500 | 500 | 0 | 0 | 100 | 68 | 80 | 30 |
| 250 | 250 | 0 | 0 | 99 | 68 | 80 | 30 |
| 125 | 125 | 0 | 0 | 95 | 60 | 60 | 30 |
| 60 | 60 | 0 | 0 | 90 | 50 | 50 | 30 |

Beispiel B2:

In grossen Behältern werden im Gewächshaus 25 Tage alte Reispflanzen der Sorte "IR 54" angepflanzt. Zwischen die eingesetzten Reispflanzen werden Samen des Reisunkrauts Echinochloa crus galli engesät. Anschliessend werden die Behälter gewässert und mit einer 2,5 cm hohen Wasserschicht bedeckt. 6 Tage nach dem Anpflanzen der Reispflanzen, bzw. der Aussaat der Samen wird der überstehenden Wasserschicht das verdünnte Konzentrat der Wirkstoffe in Mengen zugesetzt, die in Aufwandmenge pro Hektar angegeben werden. Die Schalen werden bis zur Auswertung nach 21 Tagen weiterhin bei einer Temperatur von 25° C und bei hoher Luftfeuchtigkeit mit Wasser bedeckt gehalten. Registriert wird die prozentuale Wachstumshemmung im Vergleich zur unbehandelten Kontrolle. Als Massstab gilt folgende lineare Skala:

| | | |
|---|---|---|
| 100 % | = | Pflanzen abgestorben |
| 50 % | = | mittlere Wirkung |
| 0 % | = | wie unbehandelte Kontrolle |

Die Versuchsergebnisse sind zusammen mit den nach der oben zitierten Colby-Formel berechneten Erwartungswerten in den folgenden beiden Tabellen eingetragen. Angegeben sind die jeweils angewendeten Aufwandmengen an Wirkstoffen sowie die geprüften Pflanzen. Die erste Tabelle zeigt die Ergebnisse der Einzelwirkstoffe, die zweite Tabelle repräsentiert die berechneten Erwartungswerte gemäss Colby in Gegenüberstellung mit den experimentell ermittelten Werten.

Aktivität von Gemischen Ie mit IIe, bzw. If mit IIe

Evaluierung:
21 Tage nach Applikation in Prozent Wachstumshemmung im Vergleich zur unbehandelten Kontrolle.

| g AS/ha | Verb. Ie 200 | Verb. If 200 | Verb. IIe 30 |
|---|---|---|---|
| Reis "IR 54" | 0 | 0 | 0 |
| Echinochloa crus galli | 72 | 70 | 69 |

| Aufwandmengen g AS/ha | | Reis "IR 54" | | Echinochloa c.g. | |
|---|---|---|---|---|---|
| Verbindung I | Verbindung IIe | gefundene Wirkung | Erwartungswert | gefundene Wirkung | Erwartungswert |
| Ie:200 | 30 | 0 | 0 | 96 | 91 |
| If:200 | 30 | 0 | 0 | 97 | 90 |

**Patentansprüche**

1. Synergistisches Mittel zur selektiven Unkrautbekämpfung, dadurch gekennzeichnet, dass es neben Träger- und/oder anderen Zuschlagstoffen als wirksame Komponente einerseits 1-Dimethylindanyl- oder 1-Dimethyltetralinyl-5-imidazolcarbonsäure-methylester der Formel I

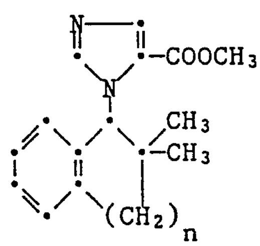

(I)

worin n für eins oder zwei steht, und deren optisch aktive Isomere und Salze mit Chlorwasserstoffsäure oder Salpetersäure und andererseits entweder einen Wirkstoff der Formel II

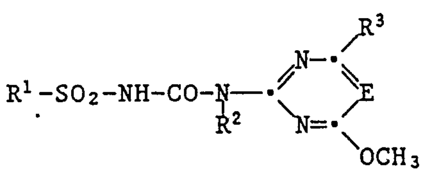

(II)

worin $R^1$ für 2-Methoxycarbonylphenyl, 2-Methoxycarbonylbenzyl, 2-Chlorphenyl, 2-(2-Chloräthoxy)phenyl, 2-(2-Methoxyäthoxy)phenyl, 4-Aethoxycarbonyl-1-methylpyrazol-5-yl oder 2-Methoxycarbonylthien-3-yl, $R^2$ für Wasserstoff oder Methyl, $R^3$ für Methoxy oder Methyl und E für Stickstoff oder die Methingruppe stehen,oder einen Wirkstoff der Formel III

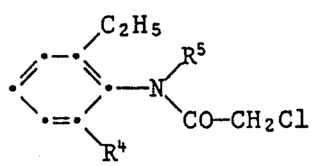

(III)

worin $R^4$ für Aethyl oder Methyl und $R^5$ für $C_2$-$C_5$-Alkoxyalkyl stehen,
oder einen Wirkstoff der Formel IV

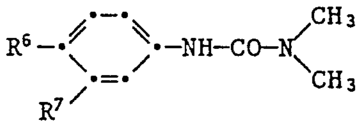

(IV)

worin $R^6$ für $C_1$-$C_3$-Alkyl und $R^7$ für Wasserstoff oder Chlor stehen, oder einen Wirkstoff der Formel V

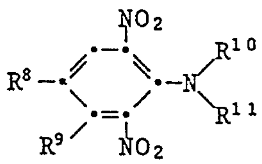

(V)

worin $R^8$ für Methyl oder Trifluormethyl, $R^9$ für Wasserstoff oder Methyl, $R^{10}$ für Wasserstoff oder Propyl und $R^{11}$ für Propyl oder 1-Aethylpropyl stehen, oder die Verbindung der Formel VI

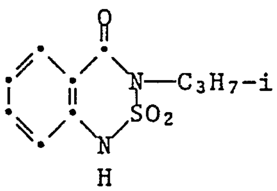

(VI)

oder die Verbindung der Formel VII

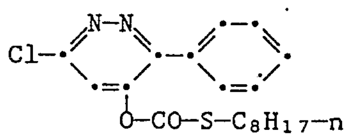

(VII)

oder die Verbindung der Formel VIII

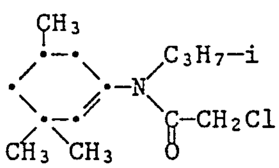

(VIII)

oder die Verbindung der Formel IX

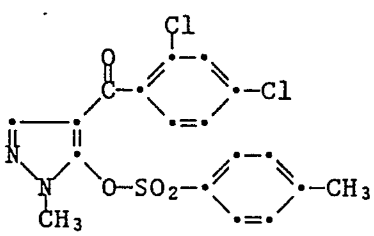

(IX)

oder die Verbindung der Formel X

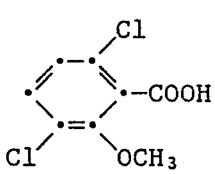

(X)

oder die Verbindung der Formel XI

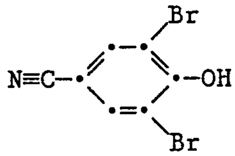 (XI)

oder die Verbindung der Formel XII

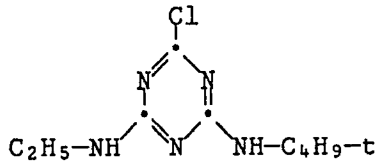 (XII)

oder die Verbindung der Formel XIII
$Cl_2C=CCl-CH_2-S-CO-N(C_3H_7-i)_2$ (XIII)
oder die Verbindung der Formel XIV

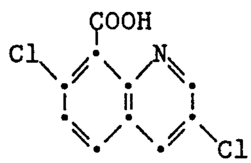 (XIV)

oder die Verbindung der Formel XV

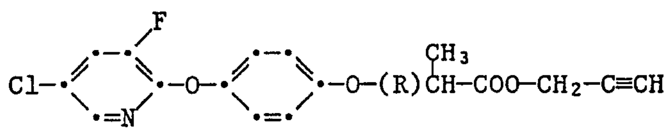 (XV)

in Mischung miteinander enthält.

2. Mittel gemäss Anspruch 1 zur Bekämpfung von Unkräutern in Getreide, Mais, Soja oder Reis.

3. Mittel gemäss Anspruch 1 zur Unkrautbekämpfung in Getreide, dadurch gekennzeichnet, dass es neben einer Verbindung der Formel I als Mischpartner
N-(2-Methoxycarbonylphenylsulfonyl)-N'-(4-methoxy-6-methyl-1,3,5-triazin-2-yl)-harnstoff oder
N-(2-Methoxycarbonylthien-3-ylsulfonyl)-N'-(4-methoxy-6-methyl-1,3,5-triazin-2-yl)-harnstoff oder
N-(2-Methoxycarbonylphenylsulfonyl)-N'-(4-methoxy-6-methyl-1,3,5-triazin-2-yl)-N'-methyl-harnstoff oder
N-[2-(2-Chloräthoxy)phenylsulfonyl]-N'-(4-methoxy-6-methyl-1,3,5-triazin-2-yl)harnstoff oder
N-(2-Chlorphenylsulfonyl)-N'-(4-methoxy-6-methyl-1,3,5-triazin-2-yl)harnstoff oder
3-(4-Isopropylphenyl)-1,1-dimethylharnstoff oder
3-(3-Chlor-4-methylphenyl)-1,1-dimethylharnstoff oder
2,6-Dinitro-N,N-dipropyl-4-trifluormethylanilin oder
N-(1-Aethylpropyl)-3,4-dimethyl-2,6-dinitroanilin oder
1-(2-Benzothiazolyl)-1,3-dimethylharnstoff oder
S-2,3,3-Trichlorallyl-N,N-diisopropylthiocarbamat oder
R-2-[4-(5-Chlor-3-fluorpyridin-2-yloxy)-phenoxy]-propionsäure-propargylester
enthält.

4. Mittel gemäss Anspruch 1 zur Unkrautbekämpfung in Mais, dadurch gekennzeichnet, dass es neben einer Verbindung der Formel I als Mischpartner
N-(Methoxymethyl)-2-chlor-N-(2,6-diäthylphenyl)-acetamid oder
N-(2-Methoxy-1-methyläthyl)-2-chlor(2-äthyl-6-methylphenyl)-acetamid oder
O-(6-Chlor-3-phenyl-pyridazin-4-yl)-s-oktyl-thiocarbonat oder
N-(3,3,5-Trimethylcyclohexen-1-yl)-N-isopropyl-2-chloracetamid oder
3,5-Dibrom-4-hydroxybenzonitril oder
2-Aethylamino-4-tert.butylamino-6-chlor-1,3,5-triazin
enthält.

5. Mittel gemäss Anspruch 1 zur Unkrautbekämpfung in Reis, dadurch gekennzeichnet, dass es neben einer Verbindung der Formel I als Mischpartner
N-(2-Methoxycarbonylbenzylsulfonyl)-N'-(4,6-dimethoxypyrimidin-2-yl)harnstoff oder
N-[2-(2-Methoxyäthoxy)phenylsulfonyl]-N'-(4,6-dimethoxy-1,3,5-triazin-2-yl)-harnstoff oder
N-(4-Aethoxycarbonyl-1-methylpyrazol-5-ylsulfonyl)-N'-(4,6-dimethoxypyrimidin-2-yl)-harnstoff oder
3-Isopropyl-1H-benzo-2,1,3-thiadiazin-4-on-2,2-dioxid oder
4-(2,4-Dichlorbenzoyl)-5-(4-methylphenylsulfonyloxy)-1-methylpyrazol oder

3,7-Dichlorchinolin-8-carbonsäure
enthält.

6. Mittel gemäss Anspruch 1, dadurch gekennzeichnet, dass es als Wirkstoffe 1-(2,2-Dimethylindan-1-yl)-5-imidazolcarbonsäuremethylester und 3-(3-Chlor-4-methylphenyl)-1,1-dimethylharnstoff enthält.

7. Mittels gemäss Anspruch 1, dadurch gekennzeichnet, dass es als Wirkstoffe 1-(2,2-Dimethyltetralin-1-yl)-5-imidazolcarbonsäuremethylester und N-(2-Methoxy-1-methyläthyl)-2-chlor-(2-äthyl-6-methylphenyl)-acetamid enthält.

8. Mittel gemäss Anspruch 1, dadurch gekennzeichnet, dass es als Wirkstoffe 1-(2,2-Dimethyltetralin-1-yl)-5-imidazolcarbonsäuremethylester und N-[2-(2-Methoxyäthoxy)-phenylsulfonyl]-N'-(4,6-dimethoxy-1,3,5-triazin-2-yl)harnstoff enthält.

9. Mittel gemäss Anspruch 1, dadurch gekennzeichnet, dass es als Wirkstoffe 1-(2,2-Dimethyltetralin-1-yl)-5-imidazoliumcarbonsäure-methylester-nitrat und N-[2-(2-Methoxyäthoxy)-phenylsulfonyl]-N'-(4,6-dimethoxy-1,3,5-triazin-2-yl)harnstoff enthält.

10. Mittel gemäss Anspruch 1, dadurch gekennzeichnet, dass im genannten Mittel die Komponente I gegenüber der zweiten Komponente der Formeln II, III, IV, V, VI, VII, VIII, IX, X, XI, XII, XIII, XIV oder XV in einem Gewichtsverhältnis zwischen 100:1 und 1:100 vorhanden ist.

11. Mittel gemäss Anspruch 10, dadurch gekennzeichnet, dass das Gewichtsverhältnis zwischen Komponente I und Komponente der Formeln II, III, IV, V, VI, VII, VIII, IX, X, XI, XII, XIII, XIV und XV 10:1 bis 1:10 beträgt.

12. Verfahren zur selektiven Unkrautbekämpfung in Getreide, Mais und Reis dadurch gekennzeichnet, dass man die verunkrauteten Kulturen pre-oder postemergent mit einer wirksamen Menge eines Mittels gemäss Anspruch 1 behandelt.

13. Verfahren gemäss Anspruch 12, dadurch gekennzeichnet, dass man die Getreidekultur mit dem genannten Mittel in Aufwandmengen behandelt, die 0,005 bis 3 kg, vorzugsweise 0,01 bis 2 kg Totalwirkstoffe pro Hektar entsprechen.

14. Verwendung einer wirksamen Menge eine Mittels gemäss Anspruch 1 zur pre- und postemergenten selektiven Unkrautbekämpfung in Getreide-, Mais- oder Reiskulturen.